# EUROPEAN PATENT APPLICATION

(11) **EP 4 840 731 A1**
(43) Date of publication of application: **18.11.2026**
(21) Application number: 26178405.2
(22) Date of filing: 13.05.2026
(51) Int. Cl.: B62D 25/08, B62D 29/00

(54) **VEHICLE FRONT PORTION STRUCTURE BODY**

(30) Priority: 14.05.2025 JP 2025081532
(71) Applicant: Toyota Jidosha Kabushiki Kaisha, Toyota-shi, Aichi-ken 471-8571 (JP)
(72) Inventor: SAEKI, Koji, TOYOTA-SHI, AICHI-KEN, 471-8571 (JP)
(74) Representative: Cabinet Beau de Loménie

(57) **Abstract**

A vehicle front portion structure body (10) includes a pair of front side member portions (12), a pair of apron upper member portions, a pair of suspension tower portions (22), and vertical wall portions (18B). The apron upper member portions are disposed at the vehicle upper side of vehicle width direction outer sides of the pair of front side member portions (12). Front end portions at the vehicle front side of the apron upper member portions extend to positions at the front ends of the pair of front side member portions (12). At each side in the vehicle width direction, the suspension tower portion (22) links the front side member portion with the apron upper member portion in the vehicle width direction. The vertical wall portions (18B) are portions of the apron upper member portions. Each vertical wall portion (18B) is formed across the suspension tower portion (22) from a front end portion (18A) of the apron upper member portion and links the front side member portion with the apron upper member portion and the suspension tower portion (22).

## Description

### BACKGROUND

### TECHNICAL FIELD.

The present invention relates to a vehicle front portion structure body.

Japanese Patent Application Laid-Open (JP-A) No. 2018-135079 discloses a vehicle body front part structure provided with shroud members that are joined to front end portions of a left and right pair of apron members.

### SUMMARY

During a frontal collision, if a front side member bends and is lifted up to the vehicle upper side thereof, load transmission performance may deteriorate.

This bending of the front side member is particularly likely to occur at the front side of a suspension tower, which has high stiffness. There is scope for improvement in regard to bending of a front side member. In the vehicle body front part structure recited in the above-mentioned JP-A No. 2018-135079, deformation of an apron member upper face portion is suppressed, but there are no recitations concerning bending of a front side member.

The present disclosure is made in consideration of the circumstances described above. An object of the present disclosure is to provide a vehicle front portion structure body that may suppress bending of a front side member portion.

A vehicle front portion structure body according to a first aspect includes: a pair of front side member portions that extend in a vehicle front-and-rear direction; a pair of apron upper member portions that are disposed at a vehicle upper side of vehicle width direction outer sides of the pair of front side member portions, the apron upper member portions extending in the vehicle front-and-rear direction, and front end portions at a vehicle front side of the apron upper member portions extending to positions at front ends of the pair of front side member portions; a pair of suspension tower portions that, at both sides in a vehicle width direction, link the front side member portions with the apron upper member portions in the vehicle width direction; and vertical wall portions that are portions of the apron upper member portions, each vertical wall portion being formed across a suspension tower portion from the front end portion of an apron upper member portion and linking a front side member portion, the apron upper member portion and the suspension tower portion.

The vehicle front portion structure body according to the first aspect is provided with each apron upper member portion, whose front end portion at the vehicle front side extends as far as the position of the front end of the front side member portion, and each vertical wall portion. The vertical wall portion is a portion of the apron upper member portion, is formed to span across the suspension tower portion from the front end portion of the apron upper member portion, and links the front side member portion with the apron upper member portion and the suspension tower portion. Therefore, the apron upper member portion including the vertical wall portion may reinforce the front side member portion at the front side of the suspension tower portion, where the front side member portion is more susceptible to bending. As a result, bending of the front side member portion in front of the suspension tower portion during a frontal collision may be suppressed.

In a vehicle front portion structure body according to a second aspect, the vehicle front portion structure body according to the first aspect further includes: a first cross member portion that connects the pair of front side member portions in the vehicle width direction; a second cross member portion that connects the pair of apron upper member portions in the vehicle width direction, a position of a front end of the second cross member portion in the vehicle front-and-rear direction being disposed at the front side relative to the first cross member portion; and a connecting portion that connects the first cross member portion with the second cross member portion in a vehicle vertical direction.

In the vehicle front portion structure body according to the second aspect, because the second cross member portion is disposed at the front side relative to the first cross member portion, a load applied during a frontal collision is dispersed via the second cross member portion, the connecting portion and the first cross member portion, and a dispersed load is applied to each front side member portion in a diagonal lower-rearward direction. As a result, lifting of the front side member portion may be suppressed.

In a vehicle front portion structure body according to a third aspect, in the vehicle front portion structure body according to the first aspect or the second aspect, the pair of front side member portions, the pair of apron upper member portions and the pair of suspension tower portions are formed integrally.

In the vehicle front portion structure body according to the third aspect, because the pair of front side member portions, the pair of apron upper member portions and the pair of suspension tower portions are formed integrally, in the framework that is integrally formed as a single component, deformation of the front side member portions during a frontal collision may be suppressed. As a result, collision resistance of the vehicle front portion structure body may be improved.

In a vehicle front portion structure body according to a fourth aspect, the vehicle front portion structure body according to the second aspect or the third aspect referring to the second aspect further includes impact-absorbing portions that are connected to the respective front ends in the vehicle front-and-rear direction of the pair of front side member portions, wherein the first cross member portion is disposed at a substantially central portion between front ends of the impact-absorbing portions and rear ends of the front side member portions.

In the vehicle front portion structure body according to the fourth aspect, because the first cross member portion is disposed at a position of the front side member portion that is more susceptible to lifting during a frontal collision, lifting of the front side member portion may be suppressed more effectively by the first cross member portion.

In a vehicle front portion structure body according to a fifth aspect, in the vehicle front portion structure body according to any one of the second aspect, the third aspect referring to the second aspect and the fourth aspect referring to the second aspect, the first cross member portion is joined to upper faces in the vehicle vertical direction of the front side member portions.

In the vehicle front portion structure body according to the fifth aspect, because the first cross member portion is joined to the upper faces of the front side member portions, lifting of the front side member portions may be suppressed from above by the first cross member portion.

In a vehicle front portion structure body according to a sixth aspect, in the vehicle front portion structure body according to any one of the second aspect and the third to fifth aspects referring to the second aspect, the connecting portion connects the first cross member portion with the second cross member portion across an entirety whole thereof in the vehicle width direction.

In the vehicle front portion structure body according to the sixth aspect, because the connection portion connects the first cross member with the second cross member across the whole length in the vehicle width direction, an applied load during a frontal collision may be dispersed and transmitted to the front side member portions more efficiently.

In a vehicle front portion structure body according to a seventh aspect, the vehicle front portion structure body according to any one of the first to sixth aspects further includes a support structure body that supports design parts, the support structure body being fixed to end portions at the vehicle front side of the apron upper member portions.

Ordinarily, when apron upper member portions extend to positions at the front ends of front side member portions, design parts of a vehicle body front face (a front bumper cover, headlamps and the like) are fixed to the apron upper member portions via respective long, thin braces or the like. In contrast, in the vehicle front portion structure body according to the present invention as recited in the seventh aspect, because the support structure body that supports design parts is provided, the design parts may be fixed to the apron upper member portions via the single support structure body. Consequently, components that are interposed between the design parts and the apron upper member portions may be minimized and assembly precision may be improved.

### ADVANTAGEOUS EFFECTS OF INVENTION

As described above, according to the vehicle front portion structure body according to the present invention, bending of front side member portions may be suppressed.

### BRIEF DESCRIPTION OF DRAWINGS

Fig. 1 is a perspective view schematically showing an example of a vehicle front portion structure body according to a first exemplary embodiment of the present invention.
Fig. 2 is a side view of the vehicle front portion structure body in Fig. 1.
Fig. 3 is a perspective view schematically showing an example of a vehicle front portion structure body according to a second exemplary embodiment of the present invention.
Fig. 4 is a side view of the vehicle front portion structure body in Fig. 3.
Fig. 5 is a side view for describing a mounting position of a first cross member portion.
Fig. 6 is a side view for describing dispersion of an applied load.
Fig. 7 is a perspective view schematically showing an example of a vehicle front portion structure body according to a third exemplary embodiment of the present invention.
Fig. 8 is a side view showing a portion of a vehicle front portion structure body according to a conventional structure.

### DETAILED DESCRIPTION

### = First Exemplary Embodiment =

A vehicle in which a vehicle front portion structure body 10 according to a first exemplary embodiment of the present disclosure is employed is described below with reference to the drawings. In the present Description and drawings, structural elements with substantially the same functional structures are assigned the same reference symbols, and duplicative descriptions thereof are omitted accordingly. The arrow FR that is shown where appropriate in the drawings indicates a front side in a vehicle front-and-rear direction and the arrow UP indicates an upper side in the vehicle vertical direction. The arrow LH indicates a vehicle width direction left side and the arrow RH indicates the vehicle width direction right side, which are vehicle width direction outer sides in the present exemplary embodiment. Where descriptions are given below simply using the directions front, rear, upper, lower, left, right, inner side and outer side, unless otherwise specified, these represent the front and rear in the vehicle front-and-rear direction, upper and lower in the vehicle vertical direction, left and right in the vehicle left-and-right direction (vehicle width direction), and an inner side and outer side in the vehicle width direction.

Unless particularly specified in this Description, each element is not limited to being a single element but may be plurally provided. In the drawings, the same reference symbol is assigned to elements that are substantially the same, and duplicative descriptions are omitted from the Description.

### - Structures of the Vehicle Front Portion Structure -

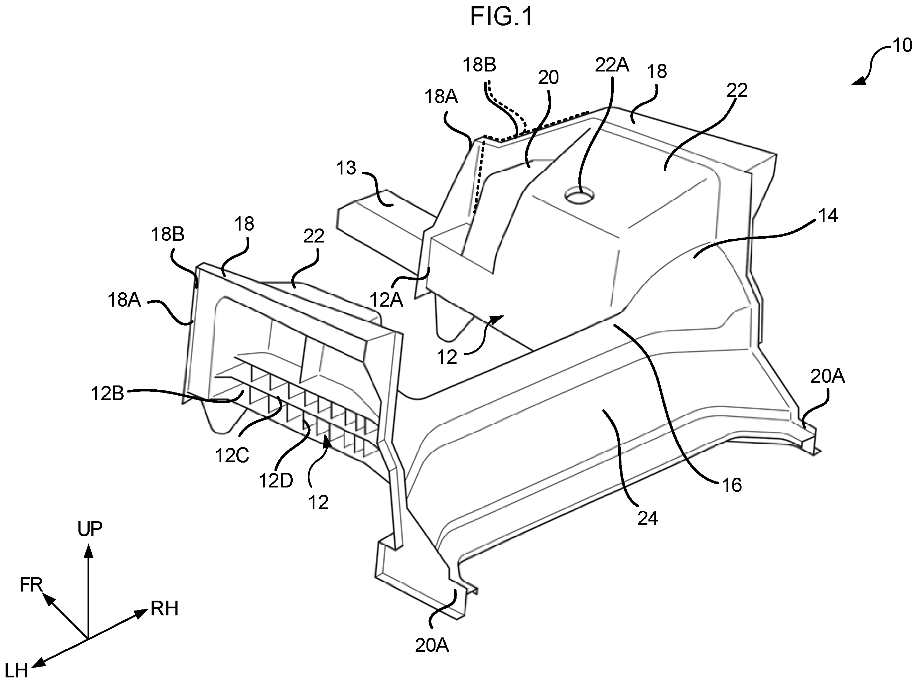

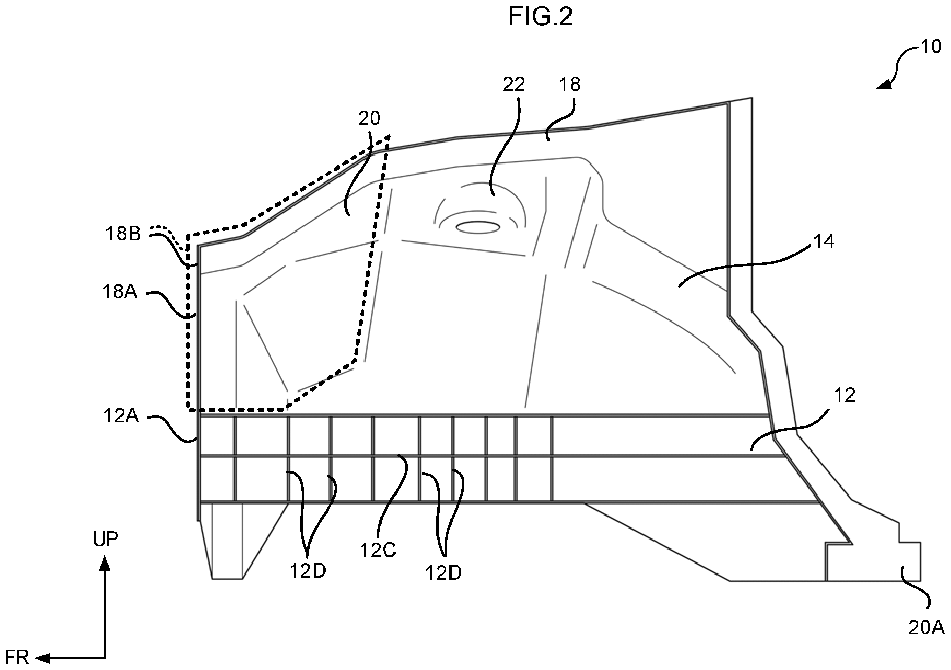

First, structures of a vehicle front portion structure body 10 are described. Fig. 1 is a perspective view schematically showing an example of the vehicle front portion structure body 10, and Fig. 2 is a side view of the vehicle front portion structure body 10 in Fig. 1.

The vehicle front portion structure body 10 representing a framework of a front portion of a vehicle is schematically shown in Fig. 1. In the present exemplary embodiment, the vehicle is, for example, an electric vehicle that runs on power generated by a power unit, such as a battery electric vehicle (BEV), a fuel cell electric vehicle (FCEV), a hybrid electric vehicle (HEV), a plug-in hybrid electric vehicle (PHEV) or the like.

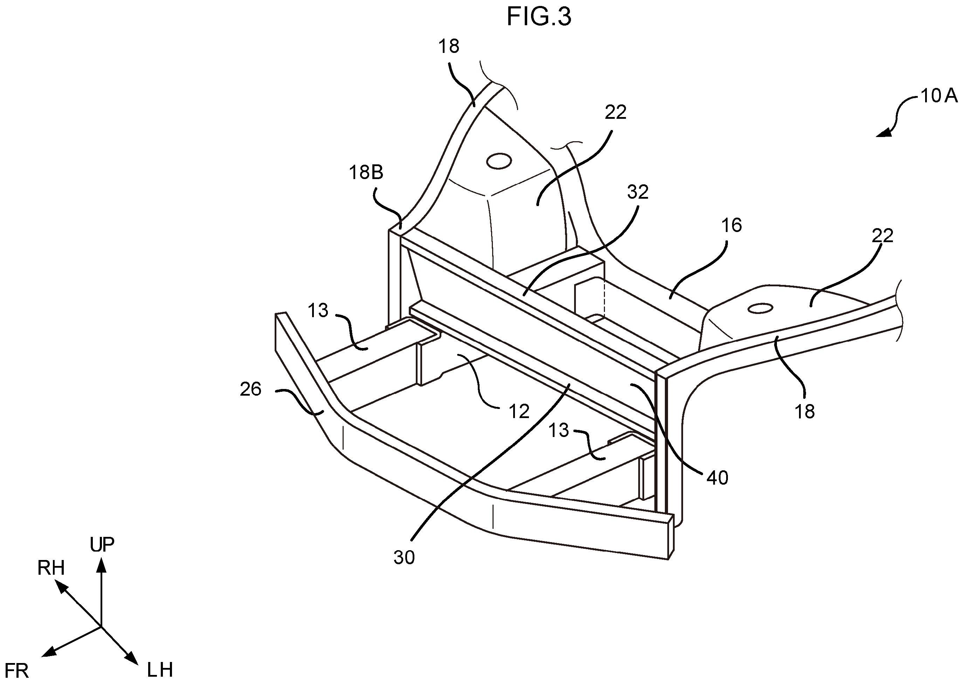

As shown in Fig. 1, the vehicle front portion structure body 10 is provided with a left and right pair of front side member portions 12, which are front framework members of the vehicle and are disposed at both sides in the vehicle width direction of the front portion of the vehicle. Each front side member portion 12 extends in the vehicle front-and-rear direction. An end portion at the vehicle rear side of each front side member portion 12 is connected to a rear cross member portion 16. A vehicle front end portion of the front side member portion 12 is connected to a front bumper reinforcement 26 (see Fig. 3; below referred to as "the bumper RF 26") that is arranged in the vehicle width direction. As an example in the present exemplary embodiment, the front side member portion 12 includes a crash box 13 serving as an impact-absorbing portion at the front end portion that is connected to the bumper RF 26. Each crash box 13 according to the present exemplary embodiment is described as being a separate member from the bumper RF 26 but structures are applicable in which the crash box 13 and the bumper RF 26 are integrated. Fig. 1 depicts only the crash box 13 at the right side, but in practice the crash box 13 is also provided at the left side.

Respective wheel well portions 14 are provided at the vehicle width direction outer sides of the pair of front side member portions 12. Tires serving as vehicle wheels (not shown in the drawings) are disposed in the wheel well portions 14. The left and right wheel well portions 14 are linked by the rear cross member portion 16. Each front side member portion 12 is provided along the length of a side member portion (not shown in the drawings) inside the wheel well portion 14 that structures a framework at the lower side of the vehicle.

Respective apron upper member portions 18 are disposed at the vehicle width direction outer sides of the rear sides of the left and right front side member portions 12, at the upper side in the vehicle vertical direction. Each apron upper member portion 18 is a framework member that structures a framework at the upper side of the vehicle front portion structure body 10 and extends in the vehicle front-and-rear direction. As shown in Fig. 2, a front end portion 18A at the vehicle front side of the apron upper member portion 18 extends to a front end position 12A of the front side member portion 12.

Each front side member portion 12 and apron upper member portion 18 has a substantially rectangular cross-sectional shape in which an opening is provided at the vehicle width direction outer side, that is, a substantially rectangular cross-sectional shape of which the vehicle width direction outer side is open. Although the opening of the apron upper member portion 18 is not shown in the drawings, the apron upper member portion 18 is provided with an impact-absorbing structure, described below, that is substantially similar to the front side member portion 12.

As shown in Fig. 1 and Fig. 2, each front side member portion 12 according to the present exemplary embodiment extends in the vehicle front-and-rear direction as mentioned above (a load application direction of an impact load) and is provided with an opening 12B to the vehicle width direction outer side. The front side member portion 12 is provided with, for example, a partition wall 12C at a substantially central portion in the vehicle vertical direction. The opening 12B of the front side member portion 12 is partitioned into two chambers, upper and lower, by the partition wall 12C.

The front side member portion 12 is also provided with vertical partition walls 12D that are plurally arranged in a row in the vehicle front-and-rear direction. The opening 12B of the front side member portion 12 is partitioned into plural chambers that are adjacent in the vehicle front-and-rear direction by the vertical partition walls 12D.

As described above, plural chambers that are divided in the vehicle front-and-rear direction and in the vehicle vertical direction are provided in the opening 12B of the front side member portion 12. Therefore, when an impact load is applied to the front side member portion 12 (in the vehicle front-and-rear direction), a number of destruction loads corresponding to the number of chambers are generated, in the process of which impact energy is absorbed.

A left and right pair of fender apron portions 20 are disposed at the vehicle width direction outer sides of the front side member portions 12, at the vehicle width direction inner sides of the apron upper member portions 18. An upper end of each fender apron portion 20 is joined to the apron upper member portion 18 and a lower end of the fender apron portion 20 is joined to the front side member portion 12. Suspension tower portions 22 that serve as suspension towers and the wheel well portions 14 are formed integrally with the fender apron portions 20. Each suspension tower portion 22 is provided at the vehicle upper side of the vehicle width direction outer side of the front side member portion 12. The vehicle lower side of the suspension tower portion 22 is joined to the fender apron portion 20. That is, the pair of suspension tower portions 22 link the front side member portion 12 and apron upper member portion 18 in the vehicle width direction at each side in the vehicle width direction.

A penetrating hole 22A is provided in an upper end face of each suspension tower portion 22. An upper end of a suspension (not shown in the drawings) is disposed at the penetrating hole 22A. The fender apron portion 20 is formed to bulge to the vehicle width direction inner side. This bulge portion forms the wheel well portion 14, which accommodates the tire (not shown in the drawings) to allow steering.

A dash panel 24 is disposed between the left and right pair of apron upper member portions 18, at the vehicle rear side of the front side member portions 12. The dash panel 24 is a member that divides a space in which a power unit can be accommodated (not shown in the drawings) from a vehicle cabin (not shown in the drawings). The dash panel 24 extends in the vehicle width direction and the vehicle vertical direction with a thickness direction in the vehicle front-and-rear direction. Vehicle width direction end portions of the dash panel 24 are connected to the fender apron portions 20 and an upper end portion of the dash panel 24 is connected to the rear cross member portion 16.

A rear end portion 20A of each fender apron portion 20 at the vehicle rear side of the wheel well portion 14 extends in the vehicle front-and-rear direction and is connected to a rocker (not shown in the drawings) that structures a framework of a vehicle body side portion.

Each suspension tower portion 22 is provided to protrude in a substantial tube shape to the vehicle upper side from the wheel well portion 14 of the fender apron portion 20. A shock absorber and a spring are accommodated inside the suspension tower portion 22. The shock absorber and spring constitute the suspension that is not shown in the drawings, which supports the tire serving as the front wheel that is accommodated in the wheel well portion 14.

As shown in Fig. 1 and Fig. 2, the vehicle front portion structure body 10 according to the present exemplary embodiment is provided with vertical wall portions 18B. Each vertical wall portion 18B is, for example, a portion of the apron upper member portion 18. As shown by the dotted lines, the vertical wall portion 18B is formed to span across the suspension tower portion 22 from the front end portion 18A of the apron upper member portion 18. The vertical wall portion 18B links the front side member portion 12 with the apron upper member portion 18 and the suspension tower portion 22.

In the vehicle front portion structure body 10 according to the present exemplary embodiment, as an example, the pair of front side member portions 12, pair of wheel well portions 14, rear cross member portion 16, pair of apron upper member portions 18, pair of fender apron portions 20, pair of suspension tower portions 22 and dash panel 24 illustrated in Fig. 1 are integrally molded by casting. The crash boxes 13 may be molded integrally with the vehicle front portion structure body 10, but need not be molded integrally. The left and right halves of the vehicle front portion structure body 10 may be respectively molded integrally.

### - Operation and effects according to the first exemplary embodiment -

Now, operation and effects of the first exemplary embodiment are described.

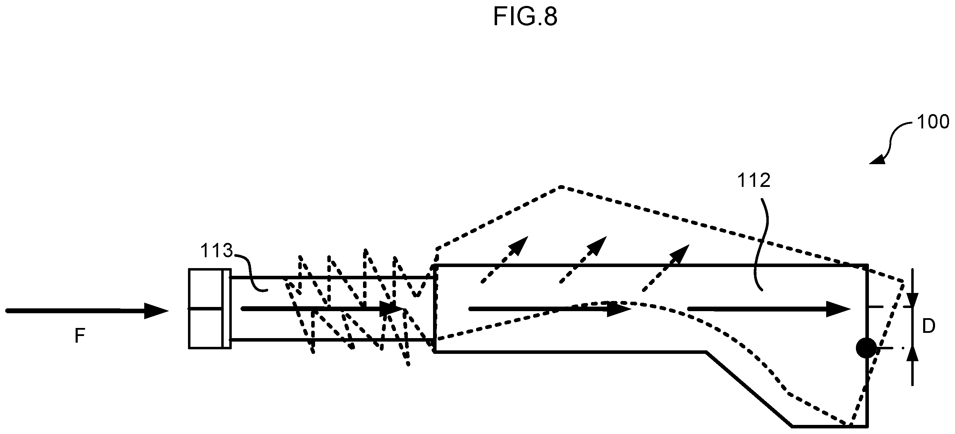

Fig. 8 is a side view showing a portion of a vehicle front portion structure 100 according to a conventional structure. As shown in Fig. 8, in the vehicle front portion structure 100 according to the conventional structure, a front side member portion 112 is formed such that a rear end portion thereof has a greater height in the vehicle vertical direction than a front end portion. As a result, an axial center of the front side member portion 112 is offset by a distance D between the front end portion and a rear end portion.

Therefore, if a load F toward the rear is applied from the vehicle front side during a frontal impact, a crash box 113 serving as an impact-absorbing portion is crushed in the axial direction, but the front side member portion 112 bends and lifts up to the vehicle upper side. When the front side member portion 112 bends in this manner, load transmission performance may deteriorate. This bending of the front side member portion 112 is especially likely to occur at the front side of a suspension tower with high stiffness.

In the vehicle front portion structure body 10 according to the first exemplary embodiment, the front end portion 18A at the vehicle front side of the apron upper member portion 18 extends to the front end position 12A of the front side member portion 12. In the vehicle front portion structure body 10, the vertical wall portion 18B that is a portion of the apron upper member portion 18 is also provided. The vertical wall portion 18B is formed across the suspension tower portion 22 from the front end portion 18A of the apron upper member portion 18, and links the front side member portion 12 with the apron upper member portion 18 and the suspension tower portion 22. Therefore, the front side member portion 12 at the front side of the suspension tower portion 22, where the front side member portion 12 is more susceptible to bending, may be reinforced by the apron upper member portion 18 including the vertical wall portion 18B. As a result, bending of the front side member portion 12 at the front of the suspension tower portion 22 during a frontal collision may be suppressed.

In the vehicle front portion structure body 10 according to the first exemplary embodiment, because the pair of front side member portions 12, the pair of apron upper member portions 18 and the pair of suspension tower portions 22 are formed integrally by casting, in the framework that is integrally formed as a single component, deformation of the front side member portions 12 during a frontal collision may be suppressed. Therefore, collision resistance of the vehicle front portion structure body 10 may be improved.

### = Second Exemplary Embodiment =

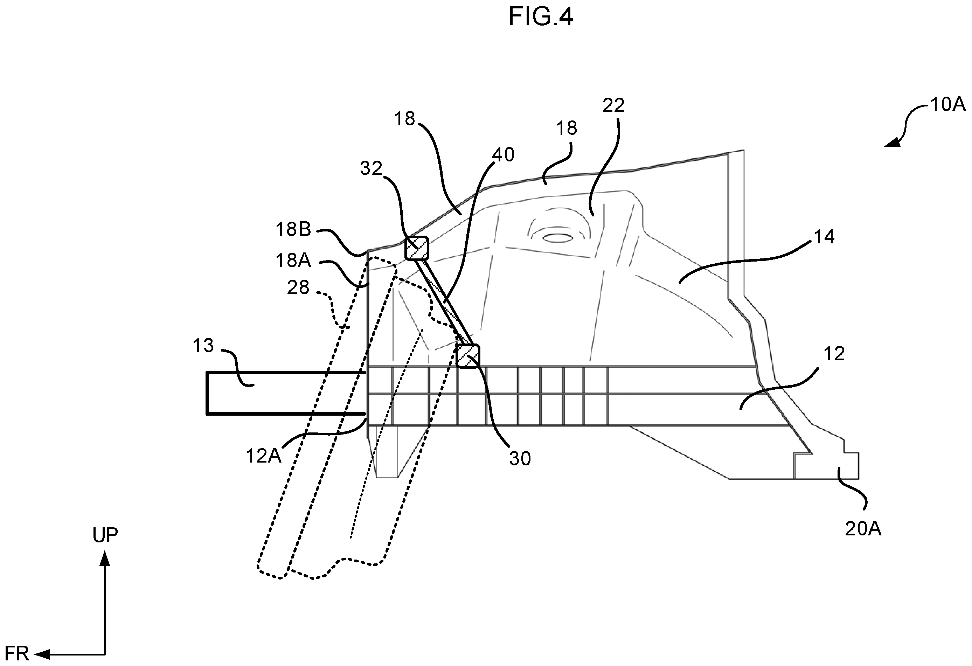

Now, a vehicle front portion structure body 10A according to a second exemplary embodiment of the present invention is described. In the second exemplary embodiment, structures that are the same as in the vehicle front portion structure body 10 according to the first exemplary embodiment described above are assigned the same reference symbols and detailed descriptions thereof are not given. Only structures that are different are described in detail. Fig. 3 is a perspective view schematically showing an example of the vehicle front portion structure body 10A, and Fig. 4 is a side view of the vehicle front portion structure body 10A in Fig. 3.

As shown in Fig. 3 and Fig. 4, the vehicle front portion structure body 10A is provided with a first cross member portion 30 that connects the pair of front side member portions 12 in the vehicle width direction. As shown in Fig. 4, in the vehicle front portion structure body 10A, a radiator 28 is disposed between the pair of front side member portions 12. The radiator 28 is disposed to be inclined such that the vehicle upper side thereof is disposed to the vehicle rear side. The first cross member portion 30 is joined to, for example, an upper face of each front side member portion 12 at a location thereof that is near to a rear portion of the radiator 28.

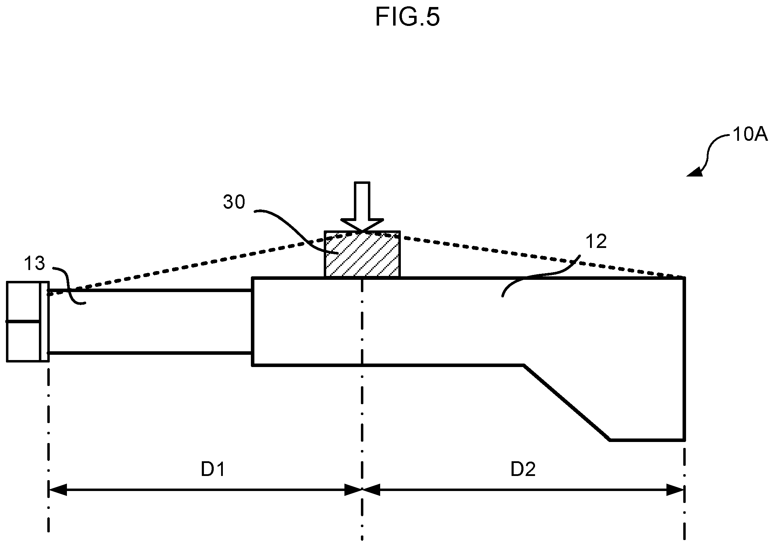

Fig. 5 is a side view for describing a mounting position of the first cross member portion. As shown in Fig. 5, the front end of each front side member portion 12 of the vehicle front portion structure body 10A according to the present exemplary embodiment is connected to the crash box 13 serving as the impact-absorbing portion. The first cross member portion 30 is disposed at a substantially central portion between the front end of the crash box 13 and the rear end of the front side member portion 12. That is, in the vehicle front-and-rear direction, a distance D1 from the front end of the crash box 13 to the center of the first cross member portion 30 is the same as a distance D2 from the center of the first cross member portion 30 to the rear end of the front side member portion 12.

As shown in Fig. 3 and Fig. 4, the vehicle front portion structure body 10A is provided with a second cross member portion 32 that connects the pair of apron upper member portions 18 in the vehicle width direction. The second cross member portion 32 is disposed with a front end position thereof at the front side relative to the first cross member portion 30 in the vehicle front-and-rear direction. The second cross member portion 32 is provided at, for example, a position near to a rear portion of an upper portion of the radiator 28.

The vehicle front portion structure body 10A is further provided with a connecting portion 40 that connects the first cross member portion 30 with the second cross member portion 32 in the vehicle vertical direction. In the present exemplary embodiment, as shown by the example in Fig. 3, the connecting portion 40 connects the first cross member portion 30 with the second cross member portion 32 across the whole thereof in the vehicle width direction. As shown by the example in Fig. 4, the connecting portion 40 is formed of a plate-shaped member and connects an upper face of the first cross member portion 30 with a lower face of the second cross member portion 32. The connecting portion 40 is formed to be, for example, thicker than the first cross member portion 30 and the second cross member portion 32 in the vehicle front-and-rear direction. The connecting portion 40 is disposed at the rear of the radiator 28, at an angle such that the upper end side of the connecting portion 40 is disposed at the vehicle front side relative to the rear end side.

### - Operation and effects according to the second exemplary embodiment -

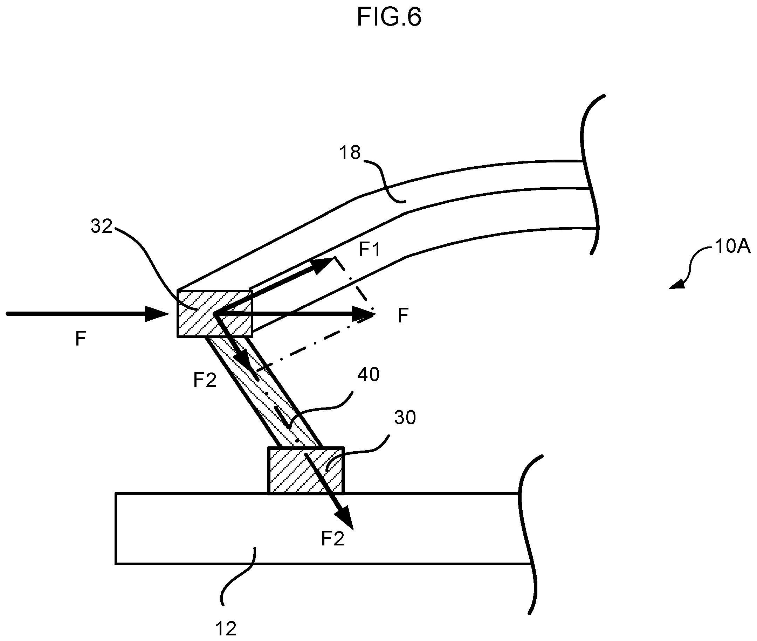

Now, operation and effects of the second exemplary embodiment are described. Fig. 6 is a side view for describing dispersion of an applied load.

In the vehicle front portion structure body 10A according to the second exemplary embodiment, because the second cross member portion 32 is disposed at the front side relative to the first cross member portion 30 as shown in Fig. 6, an applied load F during a frontal collision is applied to the front side member portion 12 via the second cross member portion 32, the connecting portion 40 and the first cross member portion 30. At this time, the applied load F that is applied to the second cross member portion 32 is dispersed into a load F1 in a direction along the apron upper member portion 18, that is, a diagonal upper-rearward direction, and a load F2 in a direction along the connecting portion 40, that is, a diagonal lower-rearward direction. That is, the applied load F is dispersed into the load F2 in the diagonal lower-rearward direction and applied to the front side member portion 12. As a result, because the load is applied to the front side member portion 12 diagonally from the upper side toward the lower side, lifting of the front side member portion 12 may be suppressed.

In the vehicle front portion structure body 10A according to the second exemplary embodiment, as shown in Fig. 5, the first cross member portion 30 is disposed at a substantially central portion between the front end of the crash box 13 serving as the impact-absorbing portion and the rear end of the front side member portion 12. Therefore, because the first cross member portion 30 is disposed at a location of the front side member portion 12 that is more susceptible to lifting during a frontal collision, lifting of the front side member portion 12 may be suppressed effectively by the first cross member portion 30.

In the vehicle front portion structure body 10A according to the second exemplary embodiment, because the first cross member portion 30 is joined to the upper face of the front side member portion 12 in the vehicle vertical direction, the front side member portion 12 may be restrained from above by the first cross member portion 30.

In the vehicle front portion structure body 10A according to the second exemplary embodiment, because the connecting portion 40 connects the first cross member portion 30 with the second cross member portion 32 across the whole length in the vehicle width direction, an applied load during a frontal collision may be dispersed and transmitted to the front side member portions 12 more efficiently.

### =Third Exemplary Embodiment =

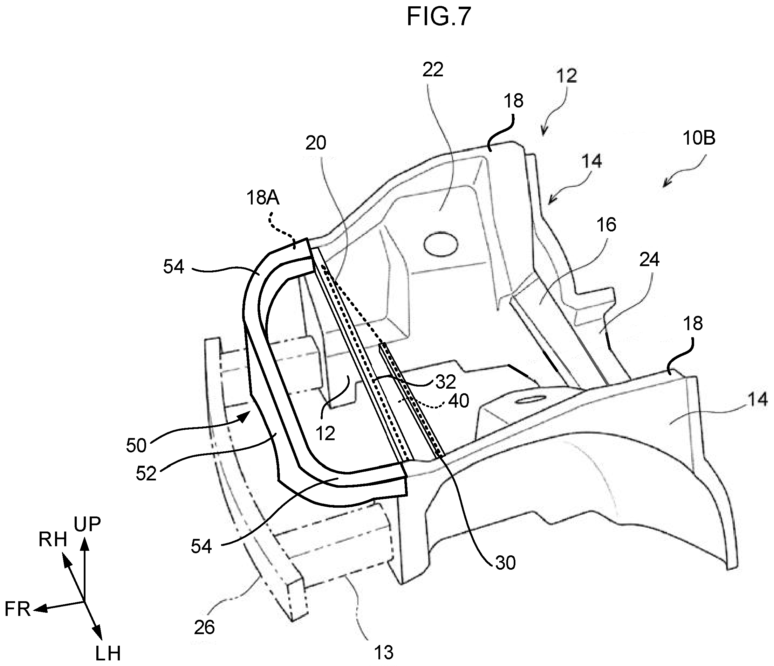

Now, a vehicle front portion structure body 10B according to a third exemplary embodiment of the present invention is described. In the third exemplary embodiment, structures that are the same as in the vehicle front portion structure body 10 according to the first exemplary embodiment described above and the vehicle front portion structure body 10A according to the second exemplary embodiment are assigned the same reference symbols and detailed descriptions thereof are not given. Only structures that are different are described in detail. Fig. 7 is a perspective view schematically showing an example of the vehicle front portion structure body 10B. In Fig. 7, the connecting portion 40 is depicted by dotted lines to facilitate understanding of the first cross member portion 30 and the second cross member portion 32.

As shown in Fig. 7, the vehicle front portion structure body 10B according to the third exemplary embodiment is provided with a support structure body 50 that supports design parts (not shown in the drawings). The support structure body 50 is, for example, integrally molded of resin, and is fixed to the front end portions 18A at the vehicle front side of the apron upper member portions 18. More specifically, as an example, the support structure body 50 is provided with a front face portion 52, which extends in the vehicle width direction at the rear side of the bumper RF 26, and attachment portions 54, which are inflected and extend toward the rear from both vehicle width direction ends of the front face portion 52.

The front face portion 52 is a member to which design parts such as a bumper cover, headlamps and the like (not shown in the drawings) are attached. The shape of the front face portion 52 is determined in accordance with the vehicle model, numbers and shapes of the design parts, and so forth. The front face portion 52 may be modified in design as appropriate. The attachment portions 54 are connected to the front end portions 18A of the apron upper member portions 18. More specifically, as an example, each attachment portion 54 has an open cross section of which the lower side is open, and is attached to the front end portion 18A of the apron upper member portion 18 so as to fracture from the upper side.

### - Operation and effects according to the third exemplary embodiment -

Now, operation and effects of the third exemplary embodiment are described.

When the apron upper member portions 18 extend to the front end positions 12A of the front side member portions 12, ordinarily, design parts of the vehicle body front face (not shown in the drawings; a front bumper cover, headlamps and the like) are fixed to the apron upper member portions 18 via respective long, thin braces or the like. In contrast, in the vehicle front portion structure body 10B according to the third exemplary embodiment, because the support structure body 50 that supports design parts is provided, the design parts may be fixed to the apron upper member portions 18 via the single support structure body 50. Consequently, components that are interposed between the design parts and the apron upper member portions 18 may be minimized and assembly precision may be improved.

### = Supplementary Descriptions =

In the exemplary embodiments described above, the vehicle front portion structure body 10 is integrally molded by casting, but the present invention is not limited thus and may also be applied to a framework structure body that is not integrally molded. Moreover, integral shaping is not limited to a casting process; a process of integral shaping by a 3-D printer may be employed.

In the exemplary embodiments described above, each of the front side member portions 12 and apron upper member portions 18 has an open cross-sectional shape that is provided with an opening to the vehicle width direction outer side, but the present invention is not limited thus. At least one of the front side member portions 12 and apron upper member portions 18 may have an open cross-sectional shape that is provided with openings to both the outer side and the inner side in the vehicle width direction.

In the second and third exemplary embodiments described above, the connecting portion 40 connects the first cross member portion 30 with the second cross member portion 32 across the whole of the vehicle width direction, but the present invention is not limited thus. For example, plural connecting portions 40 may be arranged in a row across the whole of the vehicle width direction, or one or a plural number of the connecting portions 40 may be provided only at portions of the vehicle width direction.

In the exemplary embodiments described above, the first cross member portion 30 is joined to the upper faces of the front side member portions 12, but the present invention is not limited thus. The first cross member portion 30 may be joined to the vehicle width direction inner side faces of the front side member portions 12. Note that joining the first cross member portion 30 to the upper faces of the front side member portions 12 may better suppress lifting of the front side member portions 12.

In the exemplary embodiments described above, the first cross member portion 30 is disposed at the substantially central portion between the front end of the crash box 13 and the rear end of the front side member portion 12, but the present invention is not limited thus. The first cross member portion 30 may be provided at any position that is at the rear side relative to the second cross member portion 32.

Structures of the present invention are not limited by the exemplary embodiments described above; suitably modified structures are applicable as long as the problem of the present invention may be solved.

## Claims

1. A vehicle front portion structure body (10) comprising:
a pair of front side member portions (12) that extend in a vehicle front-and-rear direction;
a pair of apron upper member portions (18) that are disposed at a vehicle upper side of vehicle width direction outer sides of the pair of front side member portions (12), the apron upper member portions (18) extending in the vehicle front-and-rear direction, and front end portions (18A) at a vehicle front side of the apron upper member portions (18) extending to positions at front ends of the pair of front side member portions (12);
a pair of suspension tower portions (22) that, at both sides in a vehicle width direction, link the front side member portions (12) with the apron upper member portions (18) in the vehicle width direction; and
vertical wall portions (18B) that are portions of the apron upper member portions (18), each vertical wall portion (18B) being formed across a suspension tower portion (22) from the front end portion (18A) of an apron upper member portion (18) and linking a front side member portion, the apron upper member portion (18) and the suspension tower portion (22).

2. The vehicle front portion structure body according to claim 1, further comprising:
a first cross member portion (30) that connects the pair of front side member portions (12) in the vehicle width direction;
a second cross member portion (32) that connects the pair of apron upper member portions (18) in the vehicle width direction, a position of a front end of the second cross member portion (32) in the vehicle front-and-rear direction being disposed at the front side relative to the first cross member portion (30); and
a connecting portion (40) that connects the first cross member portion (30) with the second cross member portion (32) in a vehicle vertical direction.

3. The vehicle front portion structure body according to claim 1 or 2, wherein the pair of front side member portions (12), the pair of apron upper member portions (18) and the pair of suspension tower portions (22) are formed integrally.

4. The vehicle front portion structure body according to any of claims 1 to 3 in combination with claim 2, further comprising impact-absorbing portions (13) that are connected to the respective front ends in the vehicle front-and-rear direction of the pair of front side member portions (12),
wherein the first cross member portion (30) is disposed at a substantially central portion between front ends of the impact-absorbing portions (13) and rear ends of the front side member portions (12).

5. The vehicle front portion structure body according to any of claims 1 to 4 in combination with claim 2, wherein the first cross member portion (30) is joined to upper faces in the vehicle vertical direction of the front side member portions (12).

6. The vehicle front portion structure body according to any of claims 1 to 5 in combination with claim 2, wherein the connecting portion (40) connects the first cross member portion (30) with the second cross member portion (32) across an entirety thereof in the vehicle width direction.

7. The vehicle front portion structure body according to any of claims 1 to 6, further comprising a support structure body (50) configured to support design parts, the support structure body (50) being fixed to end portions at the vehicle front side of the apron upper member portions (18).
